# EUROPEAN PATENT APPLICATION

(11) **EP 1 153 690 A1**
(43) Date of publication of application: **14.11.2001**
(21) Application number: 01110198.7
(22) Date of filing: 08.05.2001
(51) Int. Cl.: B23K 1/00, B23K 1/20, F02M 25/07, F28F 9/18, B23K 35/30

(54) **Brazing method, brazement, method of production of corrosion-resistant heat exchanger, and corrosion-resistant heat exchanger**

(30) Priority: 10.05.2000 JP 2000136693; 02.03.2001 JP 2001057725
(71) Applicant: Denso Corporation, Kariya-city, Aichi-pref., 448-8661 (JP)
(72) Inventor: Maeda, Akihiro, Kariya-City, Aichi-Pref. 448-8661 (JP); Sakamoto, Yoshitsugu, Kariya-City, Aichi-Pref. 448-8661 (JP); Obayashi, Shinkichi, Kariya-City, Aichi-Pref. 448-8661 (JP); Kajikawa, Shunji, Kariya-City, Aichi-Pref. 448-8661 (JP)
(74) Representative: Klingseisen, Franz, Dipl.-Ing.

(57) **Abstract**

A method of production of an inexpensive corrosion-resistant heat exchanger made of stainless steel including the steps of electroplating chrome to a thickness of 15µm on at least one of the end faces of a plurality of first and second shaped plates made of stainless steel alternately stacked in the thickness direction so as to form a chrome-based brazing filler metal layer, then electrolessly plating or electroplating Ni-P to a thickness of 35µm on the chrome-based brazing filler metal layer to form a nickel-based brazing filler metal layer. The first and second shaped plates are brazed together through the chrome-based brazing filler metal layer and the nickel-based brazing filler metal layer to obtain a high corrosion resistant heat exchanger. Further, a fine metal structure can be realized in the high corrosion resistance brazing filler metal filler and therefore the occurrence of cracking at the grain boundaries of the metal structure can be reduced.

## Description

### BACKGROUND OF THE INVENTION

### 1. Field of the Invention

The present invention relates to a brazing method of a brazement comprising interposing a nickel-based brazing filler metal layer between brazing parts of first and second joining members or first and second shaped plates comprised of stainless steel and heating them in that state to a temperature of at least the melting point of the nickel-based brazing filler metal layer to braze together the first and second joining members, more particularly relates to a method for production of a corrosion resistant heat exchanger produced by brazing and having brazing parts of first and second joining members or first and second shaped plates exposed to a corrosive environment through which a corrosive fluid flows, and a brazement and corrosion resistant heat exchanger obtained by these methods

### 2. Description of the Related Art

In the past, an exhaust gas heat exchanger for cooling exhaust gas recirculation gas (EGR gas) of an exhaust gas recycling system which takes out part of the exhaust gas from an engine exhaust system and returns it to the intake system for addition to the air-fuel mixture has been exposed to high temperature (more than 400°C or so) EGR gas containing sulfides and condensed water from the same, so generally has been required to have a high corrosion resistance. Therefore, exhaust gas heat exchangers have generally been of the multipipe corrosion resistant heat exchanger type using superior corrosion and heat resistant stainless steel (see FIG. 11) as shown in Japanese Unexamined Patent Publication (Kokai) No. 9-310995 and Japanese Design Registration No. 1021832.

To join such stainless steel, considering the need for heat resistance and corrosion resistance, use is made of the nickel brazing filler metals stipulated in industrial standards such as the Japan Industrial Standard (JIS) and improved versions. Such nickel brazing filler metals are extremely expensive compared with general copper brazing filler metals etc. Nickel brazing filler metals are available in a powder, paste, or foil form. Powder or paste materials are coated on the required locations, while foil materials are preplaced. Nickel brazing filler metal foil is particularly expensive among the nickel brazing filler metals, so generally a paste is used. In the case of the multipipe corrosion resistant heat exchanger 100, the brazing filler metal for joining the parts has to be applied to about six locations. The area of coating, that is, the amount used, is small, so even if an expensive brazing filler metal is used, it does not lead to a large rise in cost. To reduce the size and improve performance, however, corrosion resistant heat exchangers of a stacked plate structure comprised of a plurality of first and second shaped plates made of stainless steel superior in corrosion resistance stacked and brazed together to form fluid channels for EGR gas between them are being researched and developed as corrosion resistant heat exchangers enabling an increase in heat exchange area between the EGR gas and cooling water.

In such a stacked plate structure corrosion resistant heat exchanger, however, if trying to interpose a paste of a nickel brazing filler metal between the brazing parts of the first and second shaped plates, the number of coating steps and the amount of nickel brazing filler metal used would become tremendous due to the extremely large number of locations where the paste of the nickel brazing filler metal has to be applied. This creates the problem of a large rise in cost. Further, in the case of a nickel brazing filler metal foil, in addition to the preplaced brazing step, the nickel brazing filler metal foil itself is extremely expensive, so there is the problem that the cost rises even more than with a paste of the nickel brazing filler metal. In this way, if using a brazing method using a conventional brazing filler metal, the cost ends up rising to a level not suitable for the final product.

Therefore, Japanese Unexamined Patent Publication (Kokai) No. 11-148791 discloses a stacked plate type heat exchanger comprised of a plurality of first and second channel plates with plated layers on their two sides. The channels and through holes are made in the first and second channel plates of this stacked plate type heat exchanger by press forming, then the surfaces are plated with the appropriate brazing filler metal. For example, when the plates are made of stainless steel, use is made of platings mainly comprised of nickel and phosphorus. Therefore, note was taken of the composition of Ni89-P11 stipulated for JIS Bni6. This brazing filler metal is supplied in a paste form, but can also be plated on stainless steel. By heating such a plated stainless steel, the plating can be made to function as a brazing filler metal. There was however, first, a problem that a nickel-phosphorus-based brazing filler metal is somewhat inferior in corrosion resistance to chrome-containing nickel-based brazing filler metals. Further, second, there was a problem that cracks sometimes occurred in the brazing filler metal layer due to the brazing conditions (heating temperature and time and cooling time).

The first problem of the inferior corrosion resistance is due to the fact that chrome itself has a high corrosion resistance. The second problem of the cracking is due to the fact that the molten brazing filler metal shrinks when cooled. Inside the brazing filler metal is formed a metal structure comprising nickel, phosphorus, iron (diffused from the stainless steel), etc. Cracks occur at the grain boundaries of the metal structure of the brazing filler metal. Therefore, to prevent cracking, it is desirable to make the metal structure finer. The inventors therefore considered plating a nickel-phosphorus-chrome alloy on a plate at a single plating operation. There are two plating methods for this: electroless plating and electroplating. It has been generally believed that in electroless plating, chrome ions inhibit the precipitation reaction of nickel ions, so it is difficult to plate both nickel and chrome. Further, in electroplating, it is said that chrome plating is difficult with chrome ions and nickel ions since nickel ions have 20 times or more better precipitation ability.

### SUMMARY OF THE INVENTION

An object of the present invention is to provide an inexpensive brazing method of a brazement whereby first and second joining members are brazed together without use of an expensive paste of a nickel brazing filler metal or nickel brazing filler metal foil and a brazement obtained by the same. Another object of the present invention is to provide a method of production of an inexpensive corrosion resistant heat exchanger whereby fluid channels and inner fins or first and second shaped plates are brazed together without use of an expensive paste of nickel brazing filler metal or nickel brazing filler metal foil and a corrosion resistant heat exchanger obtained by the same.

According to a first aspect of the present invention, there is provided a brazing method for a brazement comprised of first and second joining members comprised of stainless steel brazed together and having brazing parts of the first and second joining members exposed to a corrosive environment in which a corrosive fluid flows, comprising a first step of plating chrome on a brazing part of at least one of the first and second joining members to form a chrome-based brazing filler metal layer at the brazing part of that at least one joining member, a second step of plating nickel-phosphorus on the chrome-based brazing filler metal layer to form a nickel-based brazing filler metal layer on the chrome-based brazing filler metal layer, and a third step of heating to a temperature of at least the melting point of the nickel-based brazing filler metal layer to braze together the first and second joining members in the state with the chrome-based brazing filler metal layer and the nickel-based brazing filler metal layer interposed between the brazing parts of the first and second joining members.

According to a second aspect of the present invention, there is provided a brazing method for a brazement comprised of first and second joining members comprised of stainless steel brazed together and having brazing parts of the first and second joining members exposed to a corrosive environment in which a corrosive fluid flows, comprising a first step of plating chrome on a brazing part of at least one of the first and second joining members to form a chrome-based brazing filler metal layer at the brazing part of that at least one joining member, a second step of plating nickel-phosphorus on the chrome-based brazing filler metal layer to form a nickel-based brazing filler metal layer on the chrome-based brazing filler metal layer, a third step of plating copper on the nickel-based brazing filler metal layer to form a copper-based brazing filler metal layer on the nickel-based brazing filler metal layer, and a fourth step of heating to a temperature of at least the melting point of the nickel-based brazing filler metal layer to braze together the first and second joining members in the state with the chrome-based brazing filler metal layer, the nickel-based brazing filler metal layer, and the copper-based brazing filler metal layer interposed between the brazing parts of the first and second joining members.

Preferably, in the first and second aspects of the invention, at least one of the joining members of the first and second joining members is at least one of a housing through which a heat exchange medium flows and comprised of stainless steel, a fluid channel arranged inside the housing and comprised of stainless steel, an inner fin arranged inside the fluid channel and comprised of stainless steel, a core plate connected to one end of a fluid channel and comprised of stainless steel, and a tank plate forming a tank chamber with the core plate and comprised of stainless steel.

According to a third aspect of the present invention, there is provided a brazement comprised of first and second joining members comprised of stainless steel brazed together and having brazing parts of the first and second joining members exposed to a corrosive environment in which a corrosive fluid flows, wherein a brazing filler metal layer containing nickel, chrome, and phosphorus is interposed between the first joining member and the second joining member.

Preferably, the brazing filler metal layer further includes copper.

According to a fourth aspect of the present invention, there is provided a method of production of a corrosion-resistant heat exchanger comprised of a housing comprised of stainless steel, a fluid channel arranged in the housing and comprised of stainless steel, and an inner fin arranged inside the fluid channels and comprised of stainless steel, a first joining member comprised of said housing or said fluid channel and a second joining member comprised of said fluid channel or said inner fin being brazed together and having brazing parts of the first and second shaped plates exposed to a corrosive environment in which a corrosive fluid flows, comprising a first step of plating chrome on a brazing part of at least one of the first and second joining members to form a chrome-based brazing filler metal layer at the brazing part of that at least one joining member, a second step of plating nickel-phosphorus on the chrome-based brazing filler metal layer to form a nickel-based brazing filler metal layer on the chrome-based brazing filler metal layer, and a third step of heating to a temperature of at least the melting point of the nickel-based brazing filler metal layer to braze together the first and second joining members in the state with the chrome-based brazing filler metal layer and the nickel-based brazing filler metal layer interposed between the brazing parts of the first and second joining members.

According to a fifth aspect of the present invention, there is provided a method of production of a corrosion-resistant heat exchanger comprised of a housing comprised of stainless steel, a fluid channel arranged in the housing and comprised of stainless steel, and an inner fin arranged inside the fluid channel and comprised of stainless steel, a first joining member comprised of said housing or said fluid channel and a second joining member comprised of said fluid channel or said inner fin being brazed together and having brazing parts of the first and second joining members exposed to a corrosive environment in which a corrosive fluid flows, comprising a first step of plating chrome on a brazing part of at least one of the first and second joining members to form a chrome-based brazing filler metal layer at the brazing part of that at least one joining member, a second step of plating nickel-phosphorus on the chrome-based brazing filler metal layer to form a nickel-based brazing filler metal layer on the chrome-based brazing filler metal layer, a third step of plating copper on the nickel-based brazing filler metal layer to form a copper-based brazing filler metal layer on the nickel-based brazing filler metal layer, and a fourth step of heating to a temperature of at least the melting point of the nickel-based brazing filler metal layer to braze together the first and second joining members in the state with the chrome-based brazing filler metal layer, the nickel-based brazing filler metal layer, and the copper-based brazing filler metal layer interposed between the brazing parts of the first and second joining members.

According to a sixth aspect of the present invention, there is provided a method of production of a corrosion-resistant heat exchanger comprised by a first shaped plate of stainless steel and second shaped plate of stainless steel stacked together and a fluid channel provided between the first and second shaped plates and forming a fluid path through which a corrosive fluid flows, the first and second shaped plates being brazed together and having brazing parts of the first and second shaped plates exposed to a corrosive environment in which a corrosive fluid flows, comprising a first step of plating chrome on a brazing part of at least one of the first and second shaped plates to form a chrome-based brazing filler metal layer at the brazing part of that at least one shaped plate, a second step of plating nickel-phosphorus on the chrome-based brazing filler metal layer to form a nickel-based brazing filler metal layer on the chrome-based brazing filler metal layer, and a third step of heating to a temperature of at least the melting point of the nickel-based brazing filler metal layer to braze together the first and second shaped plates in the state with the chrome-based brazing filler metal layer and the nickel-based brazing filler metal layer interposed between the brazing parts of the first and second shaped plates.

According to a seventh aspect of the present invention, there is provided a method of production of a corrosion-resistant heat exchanger comprised by a first shaped plate of stainless steel and a second shaped plate of stainless steel stacked together and a fluid channel provided between the first and second shaped plates and forming a fluid path through which a corrosive fluid flows, the first and second shaped plates being brazed together and having brazing parts of the first and second shaped plates exposed to a corrosive environment in which a corrosive fluid flows, comprising a first step of plating chrome on a brazing part of at least one of the first and second shaped plates to form a chrome-based brazing filler metal layer at the brazing part of that at least one shaped plate, a second step of plating nickel-phosphorus on the chrome-based brazing filler metal layer to form a nickel-based brazing filler metal layer on the chrome-based brazing filler metal layer, a third step of plating copper on the nickel-based brazing filler metal layer to form a copper-based brazing filler metal layer on the nickel-based brazing filler metal layer, and a fourth step of heating to a temperature of at least the melting point of the nickel-based brazing filler metal layer to braze together the first and second shaped plates in the state with the chrome-based brazing filler metal layer, the nickel-based brazing filler metal layer, and the copper-based brazing filler metal layer interposed between the brazing parts of the first and second shaped plates.

According to an eighth aspect of the present invention, there is provided a corrosion resistant heat exchanger comprised of a plurality of shaped plates made of stainless steel superior in corrosion resistance joined together in a thickness direction, provided between each adjoining two shaped plates with a fluid passage forming a fluid channel through which a corrosive fluid flows, and having a plurality of said fluid channels, wherein the plurality of shaped plates are brazed together through a brazing filler metal layer containing nickel, chrome, and phosphorus.

According to a ninth aspect of the present invention, there is provided a corrosion resistant heat exchanger comprised of a housing comprised of stainless steel, a fluid channel arranged inside the housing, carrying a corrosive fluid, and comprised of stainless steel, and an inner fin arranged inside the fluid channel and comprised of stainless steel, wherein the fluid channel and the inner fin are brazed together through a brazing filler metal layer containing nickel, chrome, and phosphorus.

### BRIEF DESCRIPTION OF THE DRAWINGS

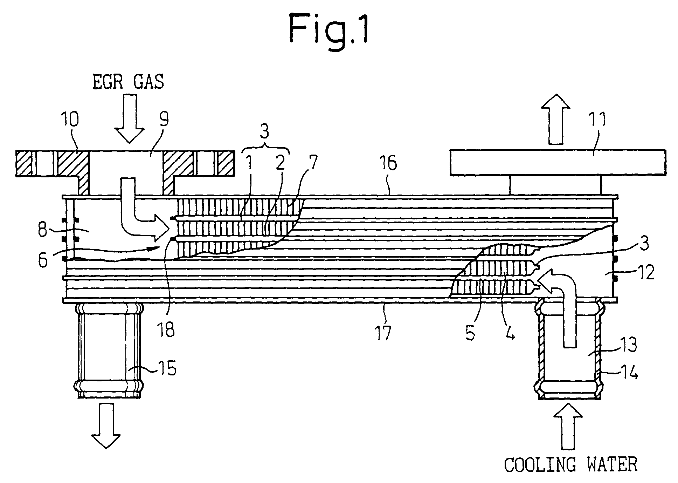

These and other objects and features of the present invention will be more apparent from the following description given with reference to the accompanying drawings, wherein: FIG. 1 is a sectional view of the overall structure of a high corrosion resistance heat exchanger of a stacked plate structure according to a first embodiment of the present invention;
FIG. 2 is a schematic view of joining parts of first and second shaped plates with chrome plating or Ni-P plating obtained by either electroless or electro plating according to a first embodiment of the present invention;
FIG. 3(a) is a schematic view of first and second shaped plates given chrome plating and Ni-P plating obtained by electroless or electro plating according to a first embodiment of the present invention;
FIG. 3(b) is a schematic view of first and second shaped plates given an Ni-Cr-P alloy layer according to a first embodiment of the present invention;
FIG. 4 is a graph of the results of comparison of the peeling strength of a brazing filler metal according to the difference in amount of Ni according to a first embodiment of the present invention;
FIG. 5 is a graph of the results of comparison of the fracture toughness of a brazing filler metal according to the difference in amount of Ni according to a first embodiment of the present invention;
FIG. 6(a) is a schematic view of first and second shaped plates given chrome plating, Ni-P plating obtained by electroless or electro plating, and Cu plating according to a first embodiment of the present invention;
FIG. 6(b) is a schematic view of first and second shaped plates given an Ni-Cr-P-Cu alloy layer according to a first embodiment of the present invention;
FIG. 7 is a disassembled view of the main structure of a multipipe high corrosion resistance heat exchange according to a second embodiment of the present invention;
FIG. 8 is a perspective view of an elliptically shaped tube and inner fins according to a second embodiment of the present invention;
FIG. 9 is a perspective view of a rectangularly shaped tube and inner fins according to a second embodiment of the present invention;
FIG. 10 is a perspective view of inner fins according to a second embodiment of the present invention;

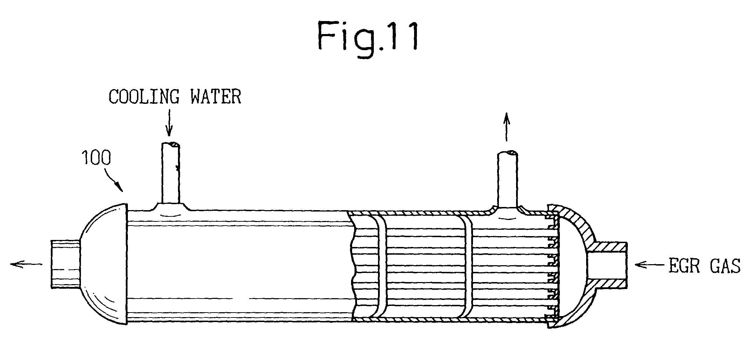

FIG. 11 is a sectional view of a multipipe corrosion resistant heat exchanger according to the related art.

### DESCRIPTION OF THE PREFERRED EMBODIMENTS

FIG. 1 to FIG. 6 are views of a first embodiment of the present invention. FIG. 1 shows the overall structure of a high corrosion resistance heat exchanger.

The high corrosion resistance heat exchanger of the present embodiment is an EGR gas cooler for exchanging heat between engine cooling water and EGR gas to cool the EGR gas. This cooler is exposed to EGR gas of over 400°C containing sulfides, nitric acid, sulfuric acid, ammonium ions, acetic acid, etc. and water condensed from the same, so is constructed by alternately stacking a plurality of first and second shaped plates 1 and 2 comprised of highly corrosion resistant stainless steel to form a stacked plate structure heat exchanger and brazing it together.

The high corrosion resistance heat exchanger is configured in the following way. That is, a plurality of first and second shaped plates (corresponding to the first and second joining members of the present invention) 1 and 2 comprised of stainless steel processed (pressed) into predetermined shapes are alternately stacked in the plate thickness direction (vertical direction in FIG. 1) to construct a stack 6 forming exhaust passages through which the EGR gas from the engine (not shown) may flow (corresponding to the fluid passages of the present invention) and cooling water passages 5 through which the engine cooling water may flow. This stack is provided between end plates 16 and 17 arranged at a predetermined interval at the illustrated upper and lower ends shown in FIG. 1.

Note that the exhaust passages 4 are formed in the following way. In FIG. 1, first shaped plates having upper end faces illustrated in FIG. 1 formed with concave shapes (and with lower end faces illustrated formed with convex shapes) and second shaped plates 2 with lower end faces illustrated in FIG. 1 formed with concave shapes (and with upper end faces formed with convex shapes) are fit together in their thickness directions and are brazed together in that state at least at the right ends (joining parts) illustrated in FIG. 1 (in the present example, the front ends illustrated in FIG. 1 and the rear ends illustrated in FIG. 1 are also brazed together) so as to form fluid channels (tubes) 3 inside them. Inside the fluid channels are arranged inner fins 7 comprised of stainless steel for increasing the contact area with the EGR gas and promoting the heat exchange between the EGR gas and the cooling water. That is, the exhaust passages 4 are formed between the first and second shaped plates 1 and 2 in the vertical direction illustrated in FIG. 1.

At the top of the high corrosion resistance heat exchanger are connected a gas inlet pipe 10 forming an inlet 9 for the EGR gas communicating with an inlet side tank 8 communicating with a plurality of exhaust passages 4 and a gas outlet pipe 11 forming an outlet (not shown) for the EGR gas finished with heat exchange communicating with an outlet side tank (not shown) communicating with the plurality of exhaust passages 4. The cooling water passages 5 are formed inside the cooling water channels (tubes) 18 obtained by stacking the second shaped plates 2 having upper end faces illustrated in FIG. 1 formed with concave shapes and first shaped plates 1 with lower end faces illustrated in FIG. 1 formed with concave shapes in their thickness directions and brazing them in that state at least at the left ends (joining parts) illustrated in FIG. 1 (in the present example, the front ends illustrated in FIG. 1 and the rear ends illustrated in FIG. 1 are also brazed together). That is, the cooling water channels 5 are formed between pairs of the second and first shaped plates 2 and 1 adjoining each other in the vertical direction illustrated in FIG. 1. Further, on the top part of the high corrosion resistance heat exchanger are connected a cooling water inlet pipe 14 formed with an inlet 13 for cooling water communicating with an inlet side tank 12 communicating with a plurality of cooling water passages 5 and a cooling water outlet pipe 15 formed with an outlet (not shown) for cooling water communicating with an outlet side tank (not shown) communicating with the plurality of cooling water passages 5.

### Method of Production of First Embodiment

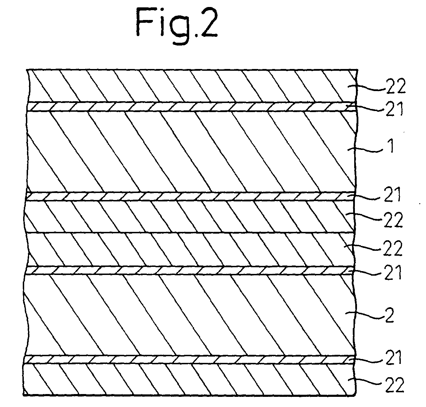

Next, the method of production of a high corrosion resistance heat exchanger of the present embodiment will be explained briefly based on FIG. 1 to FIG. 3. Here, FIG. 2 is a schematic view of joining parts of first and second shaped plates plated with chrome and Ni-P obtained by electroless or electro plating.

Here, since there is generally a thin, tough oxide coating on the surface of stainless steel, a plating with a good adhesion is hard to obtain with just ordinary pickling and activation. Further, the plating has to be done quickly after removing the oxide coating. Therefore, as pre-treatment for stainless steel, it is desirable to preliminarily clean, rinse, electrolytically clean, then rinse again the stainless steel. Here, as the stainless steel, first and second shaped plates (base materials) 1 and 2 processed to give the shapes of the fluid channels 3 are used. The thicknesses of the first and second shaped plates 1 and 2 are 0.2 to 0.4 mm or 1.2 to 1.6 mm. Further, the materials of the first and second shaped plates 1 and 2 are made chrome-containing ferrite (α-iron) based stainless steel and nickel-chrome containing austenite (γ iron) stainless steel.

Next, the two end faces of the first and second shaped plates 1 and 2 are electroplated with chrome to 15 µm (Cr plating). The Cr plating is performed using 200 to 250 g/liter of chromic acid and a so-called Sargent solution of 100 parts chromic acid and 1 part of sulfuric acid at 45 to 55°C and 10 to 60 A/dm². For example, the first and second shaped plates 1 and 2 are immersed in a plating bath through which a straight current (normal current) is passed and held there for a suitable time. The electrodeposition is started after the first and second shaped plates 1 and 2 are warmed.

Alternatively, it is also possible to use as a chrome plating bath a tetrachromate bath, a fluorine ion added bath, a silicofluoric acid ion addition bath, a crack free chrome plating bath, or a microcrack plating bath. By chrome plating the two end faces of the first and second shaped plates 1 and 2, as shown in FIG. 2, it is possible to form a chrome-based brazing filler metal layer (Cr) 21 mainly comprised of chrome on the two end faces of the first and second shaped plates 1 and 2 (first step).

Next, the two end faces of the first and second shaped plates 1 and 2 are given chemical nickel platings (electroless Ni-P platings) to a thickness of 35 µm by self-catalyzed plating reactions. Here, electroless Ni-P (phosphorus) plating will be explained. Electroless Ni-P plating is performed at a high temperature of 90 to 100°C since a large plating thickness of several tens of microns and high speed plating are desired. Normally, this is used for treating an underlayer for soldering, improving corrosion resistance, improving abrasion resistance of sliding parts, and thickly plating tools and other functional parts.

As this electroless Ni-P plating bath, use is made of a phosphite bath containing a phosphite as a reducing agent. By giving the two end faces of the first and second shaped plates 1 and 2 electroless Ni-P platings in this way, as shown in FIG. 2, a nickel-based brazing filler metal layer (Ni-P) 22 of an Ni-P alloy containing 10% of phosphorus is formed on the two end faces of the first and second shaped plates (second step).

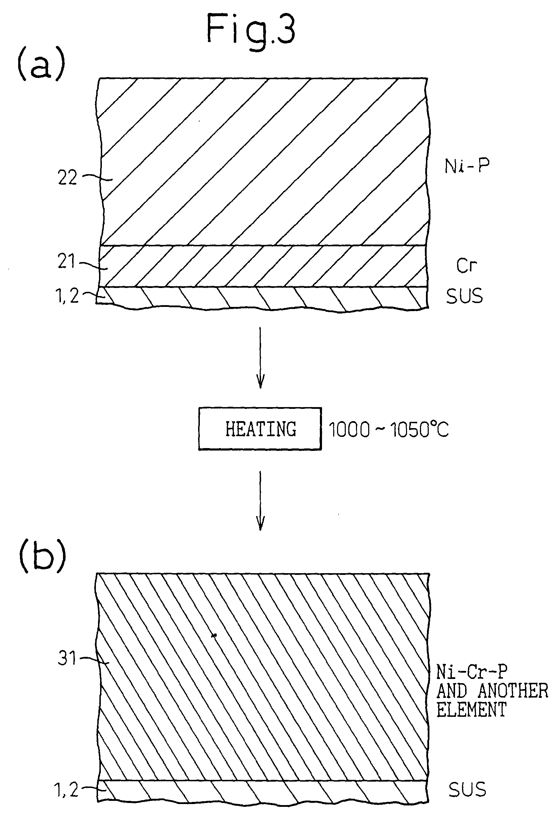

Further, as shown in FIG. 2 and FIG. 3(a), the joining parts of the first and second plates 1 and 2 formed with the chrome-based brazing filler metal layer 21 and the nickel-based brazing filler metal layer 22 on their two end faces are stacked to form a fluid channel 3 with inner fins 7 inside the exhaust passage 4. A plurality of fluid channels 3 of this structure are then stacked to form a stack (stacked plate structure heat exchanger) 6. The end plates 16 and 17 are overlaid at the two ends of the stack 6 in the stacking direction, the gas inlet pipe 10, gas outlet pipe 11, cooling water inlet pipe 14, and cooling water outlet pipe 15 are assembled at the predetermined locations of the end plates 16 and 17 to form a stacked plate assembly.

Then the stacked plate assembly is brazed together in a vacuum furnace or other heating furnace to produce a high corrosion resistance heat exchanger made of stainless steel. That is, by heating at a brazing temperature higher than the melting point of the nickel-based brazing filler metal layer 22 and lower than the melting point of the chrome-based brazing filler metal layer 21 (1000 to 1050°C) to melt the nickel-based brazing filler metal in the state with the chrome-based brazing filler metal layer 21 and the nickel-based brazing filler metal layer 22 interposed between the first and second shaping plates, the nickel-based brazing filler metal flows by surface tension to the brazing parts of the first and second shaped plates and brazes the brazing parts of the first and second shaped plates. Therefore, a high corrosion resistance heat exchanger made of stainless steel is produced by brazing together a stacked plate structure heat exchanger comprised of a plurality of first and second shaped plates stacked in the thickness direction (third step).

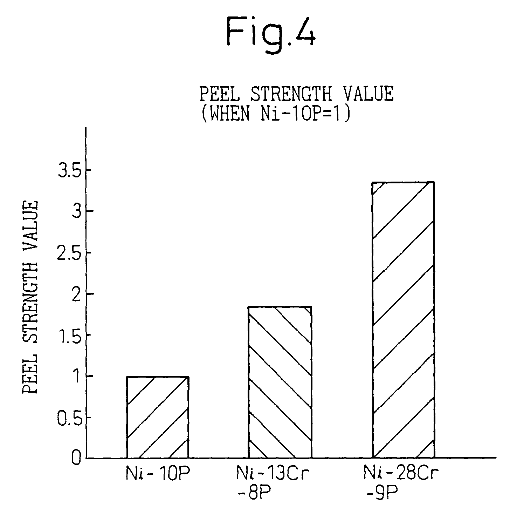

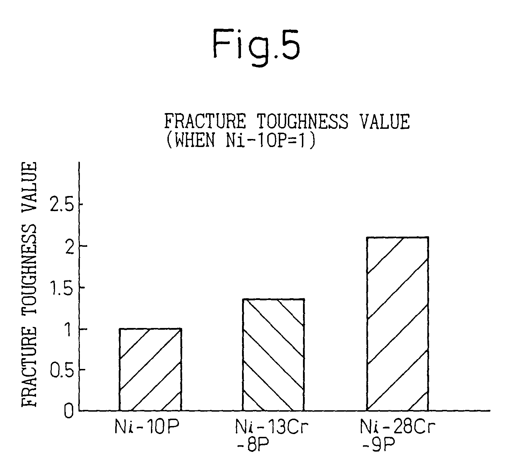

As a result, as shown in FIG. 3(b), by the melting of the Ni, Cr, and P, a brazing filler metal containing an alloy composition of Ni-Cr28-P8-etc. (nickel-chrome-phosphorus alloy) 31 can be obtained. At this time, by plating the two end faces of the first and second shaped plates 1 and 2 with chrome before plating them with Ni-P, it is possible to realize a finer metal structure in the brazing filler metal 31, improve the strength of the brazing filler metal and the fracture toughness, and reduce the occurrence of cracks at the grain boundaries in the metal structure. Note that as shown in FIG. 4, the peeling strength of the brazing filler metal increases along with an increase in the amount of Cr when Ni-10P is made "1". As shown in FIG. 5, the fracture toughness of the brazing filler metal also increases along with an increase in the amount of chrome when Ni-10P is "1". Note that by changing the brazing temperature when heating the brazing filler metal to a temperature of its melting point or more, the plating thickness of the Cr plating, and the plating thickness of the Ni-P plating or Cu plating, it is possible to obtain any alloy composition. Further, the Ni-P plating may be obtained by electroplating or electroless plating. Further, the amount of P is not limited to 10% and may be changed freely in the range of 1 to 20%.

### Features of First Embodiment

In this way, in the first embodiment, by plating the two end faces of the plurality of stacked first and second shaped plates 1 and 2 with an electrolytic Cr plating and an Ni-P plating obtained by electroless or electro plating, there is no need to use an expensive paste of nickel brazing filler metal or nickel brazing filler metal foil and the coating step or preplaced brazing step can be eliminated. Due to this, it is possible to reduce the manufacturing cost of a stacked plate structure high corrosion resistance heat exchanger made of stainless steel used as an EGR gas cooler.

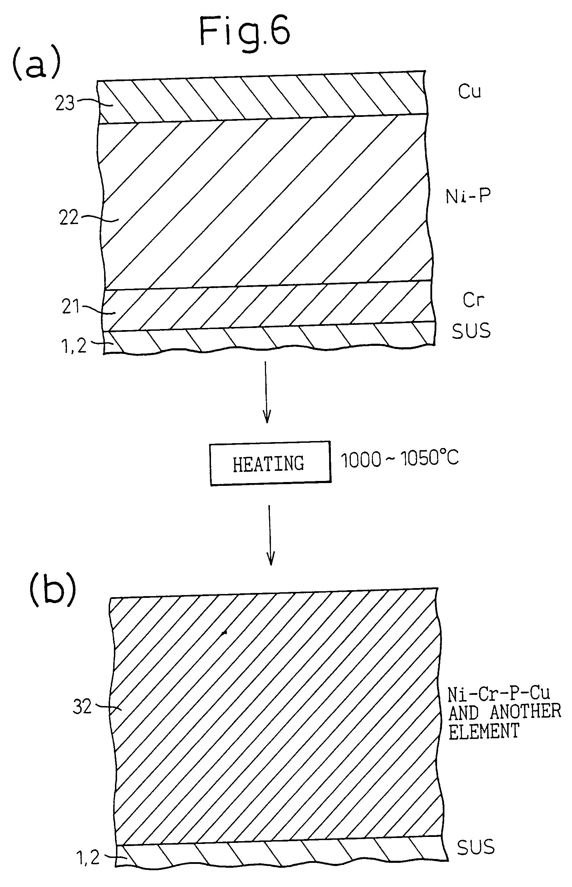

As another embodiment, as shown in FIG. 6(a), the two end faces of the first and second shaped plates 1 and 2 are given electrolytic Cr platings (first step), Ni-P platings obtained by either electroless or electro plating (second step), and then Cu platings obtained by either electroless or electro plating (third step). Further, the Cu platings obtained by either electroless or electro plating are obtained by immersion in a copper cyanide plating bath or copper sulfate plating bath for electrodeposition or a self catalyzed reaction. For example, in the case of a copper cyanide plating bath, the copper is plated using 60 g/liter of copper cyanide, 70 g/liter of sodium cyanide, 5 to 15 g/liter of free sodium cyanide, and 20 g/liter of potassium hydroxide at 50 to 60°C at 1 to 3 A/dm² (air agitation). By plating copper in this way, a Cu-based brazing filler metal layer (Cu) 23 obtained by electroless or electro plating of Cu is obtained on the surface of the chrome-based brazing filler metal layer (Cr) 21 and nickel-based brazing filler metal layer (Ni-P) 22 formed on the two end faces of the first and second shaped plates.

Next, the assembly is heated at a brazing temperature of at least the melting point of the brazing filler metal layers 21 to 23 (1000 to 1050°C) in the state with the brazing filler metal layers 21 to 23 interposed between the first and second shaped plates so as to braze together the first and second shaped plates 1 and 2. As a result, as shown in FIG. 6(b), by the melting of the Ni, Cr, P, and Cu, a brazing filler metal containing an alloy composition of Ni-Cr17-P10-Cu9-etc. (nickel-chrome-phosphorus-copper alloy) 32 can be obtained. At this time, by plating the two end faces of the first and second shaped plates 1 and 2 with copper after plating them with Ni-P, it is possible to realize a finer metal structure in the brazing filler metal 32, improve the strength of the brazing filler metal and reduce the occurrence of cracks at the grain boundaries in the metal structure. Note that by changing the brazing temperature when heating the brazing filler metal layer to a temperature of its melting point or more, the plating thickness of the Cr plating, and the plating thickness of the Ni-P plating or Cu plating, it is possible to obtain any alloy composition. Further, the Ni-P plating may be obtained by electroplating or electroless plating. Further, the amount of P is not limited to 10% and may be changed freely in the range of 1 to 20%.

### Second Embodiment

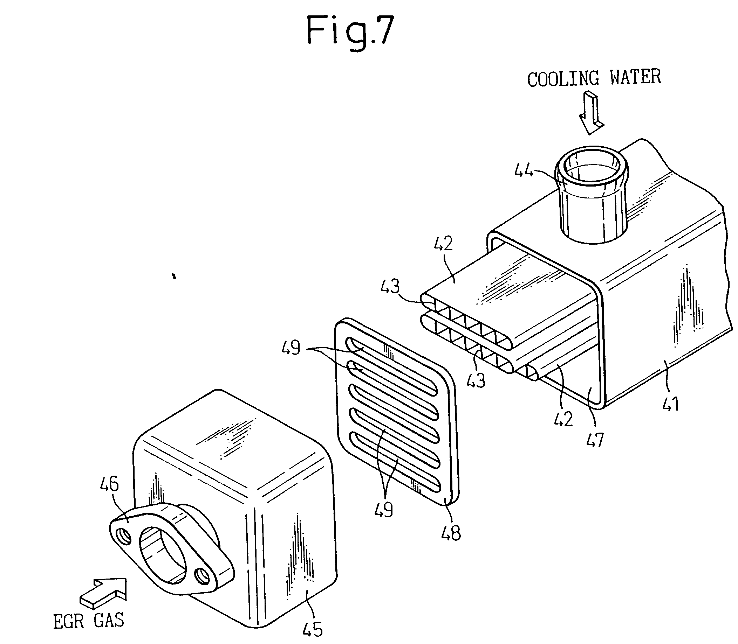

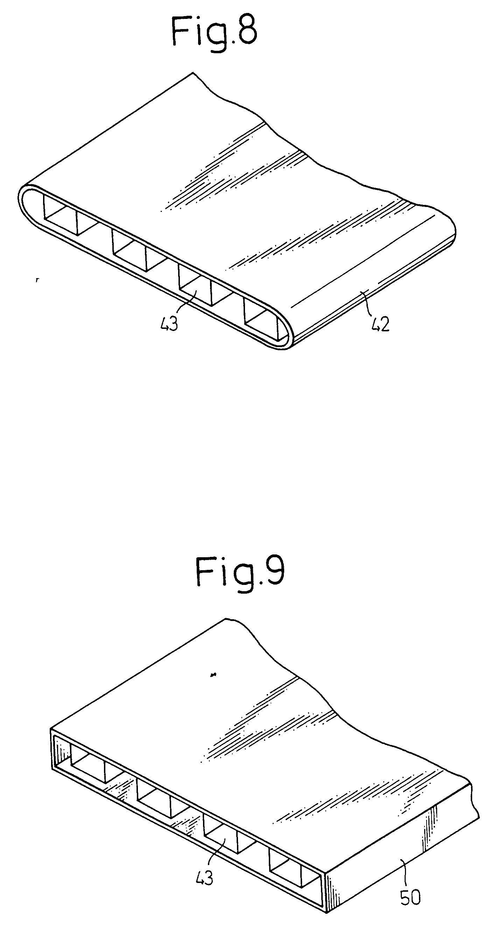

FIG. 7 to FIG. 10 show a second embodiment of the present invention, wherein FIG. 7 is a view of a multipipe structure corrosion resistant heat exchanger, FIG. 8 is a view of an elliptically shaped tube and inner fins, and FIG. 9 is a view of a rectangularly shaped tube and inner fins.

The multipipe structure high corrosion resistance heat exchanger of the present embodiment is an EGR gas cooler for exchanging heat between engine cooling water and EGR gas to cool the EGR gas and is comprised of a housing 41 through which the engine cooling water (corresponding to the heat exchange medium of the present invention) flows, elliptically shaped tubes 42 arranged in the housing 41, through which the EGR gas (corresponding to corrosive fluid of the present invention) flows, and made of stainless steel, and inner fins 43 arranged inside the elliptically shaped tubes 42 all brazed together.

The housing 41 is formed integrally into a rectangularly shaped tube by for example pressing stainless steel and is provided with an inlet pipe 44 for supplying cooling water inside and an outlet pipe (not shown) for discharging the cooling water from the outside. At one end of the housing 41 in the tube direction is brazed a container-shaped first tank plate 45. At the other end of the housing 41 in the tube direction is brazed a container-shaped second tank plate (not shown). At the ceiling part of the first tank plate 45 is brazed a connecting part (flange) 46 to which a gas inlet pipe (not shown) for supplying EGR gas into the housing 41 is connected. At the ceiling part of the second tank plate is connected a connecting part (joint) to which a gas outlet pipe (not shown) for discharging EGR gas from inside the housing 41 is connected.

The elliptically shaped tube 42 corresponds to the fluid channel of the present invention and is stacked at equal intervals in the vertical direction shown in the cooling water passage (fluid passage) 47 formed in the housing 41. One end of each elliptically shaped tube 42 is inserted into and brazed with an elongated hole 42 of the first core plate 48 comprising the first header along with the first tank plate 45. The other hand of the elliptically shaped tube 42 is inserted into and brazed with an elongated hole of the second core plate comprising the second header along with the second tank plate. Here, it is also possible to use rectangularly shaped tubes 50 as fluid channels or to comprise the fluid channels by a plurality of parts. Further, while a single column of fluid channels was shown in the figure, two or more columns may also be provided.

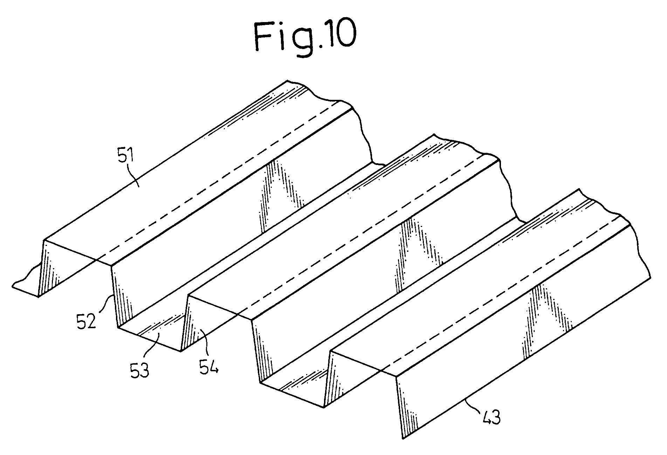

The inner fins split the fluid passage formed in the elliptically shaped or rectangularly shaped tubes 42 and 50 into a plurality of fluid passages and thereby increase the heat exchange area and improve the heat conduction rate to improve the heat exchange performance between the cooling water and EGR. The inner fins 43, as shown in FIG. 10, are formed integrally in substantially wave-like shapes from a thin stainless steel sheet and include a top part 51, a side wall 52 bent in a direction substantially perpendicular from the illustrated right end of the top part 51 (downward direction in illustration), a bottom part 53 bent in a direction substantially perpendicular from the illustrated bottom end of the side wall 52 (right direction in illustration), a side wall 54 bent in a direction substantially perpendicular with the illustrated right end of the bottom part 53 (upward direction in illustration), and so on.

In this embodiment, one or both end faces of the brazing parts of the housing (corresponding to the first joining member of the present invention) 41 and second core plate (corresponding to second joining member of the present invention) 48, the brazing parts of the housing (corresponding to the first joining member of the present invention) 41 and second tank plate (corresponding to second joining member of the present invention) 45, the brazing parts of the first and second core plates (corresponding to the first joining member of the present invention) 48 and first and second tank plates (corresponding to second joining member of the present invention) 45, the brazing parts of the elliptically shaped or rectangularly shaped tubes (corresponding to the first joining member of the present invention) 42 and 50 and the first and second core plates (corresponding to second joining member of the present invention) 48, and the brazing parts of the elliptically shaped or rectangularly shaped tubes (corresponding to the first joining member of the present invention) 42 and 50 and inner fins (corresponding to second joining member of the present invention) 43 may be given chrome platings and Ni-P platings by either electroless or electro plating in the same way as in the first embodiment.

Further, by heating at a brazing temperature higher than the melting point of the nickel-based brazing filler metal layer 22 and lower than the melting point of the chrome-based brazing filler metal layer 21 (1000 to 1050°C) in the state with the chrome-based brazing filler metal layer 21 and the nickel-based brazing filler metal layer 22 interposed between the first and second joining members so as to melt the nickel-based brazing filler metal and cause the nickel-based brazing filler metal to flow between the brazing parts of the first and second joining materials to braze them together, a multipipe high corrosion resistance heat exchange made of stainless steel is produced. Further, as another embodiment, it is possible to give the two end faces or either end face of the brazing parts of the first and second joining members a chrome plating and further an Ni-P plating by either electroless or electro plating, then give a Cu plating by either electroless or electro plating.

For joining the first and second core plates 48 and the first and second tank plates 45 among these, it is also possible to coat a paste of a nickel brazing filler metal. Further, even if plating the two end faces of the brazing parts of the joining members, it is possible to give only one a chrome plating and Ni-P plating by either electroless or electro plating. For example, in the core part of a multipipe high corrosion resistance heat exchanger, it is possible to give a chrome plating and a Ni-P plating by either electroless or electro plating to only the two end faces of the elliptically shaped or rectangularly shaped tubes 42 and 50, plate only the two end faces of the inner fins 43, or give a chrome plating and Ni-P plating by either electroless or electro plating to only the two end faces of the first and second core plates 48.

Further, it is possible to divide the elliptically shaped or rectangularly shaped tubes 42 and 50 into two, give the two end faces of the tube parts a chrome plating and Ni-P plating by either electroless or electro plating and then braze them together to obtain the elliptically shaped or rectangularly shaped tubes 42 and 50. In this case, even without plating the inner fins 43 with either chrome or Ni-P, the elliptically shaped or rectangularly shaped tubes 42 and 50 and the inner fins 43 can be brazed together and the elliptically shaped or rectangularly shaped tubes 42 and 50 and the first and second core plates 48 can be brazed together.

### Other Embodiments

In the above embodiments, the first and second shaped plates 1 and 2 forming the fluid channels 3 of the high corrosion resistance heat exchanger were given nickel-based platings after being processed into the shapes of the parts, but it is also possible to plate the materials before processing to give an Ni-P plating by either electroless or electro plating and then process them into the shapes of the desired parts. Further, in the above embodiments, the two end faces of the first and second shaped plates 1 and 2 and other first and second joining members were given chrome platings and Ni-P platings by either electroless or electro plating or given chrome platings, Ni-P platings by either electroless or electro plating, and Cu platings by either electroless or electro plating, but it is also possible to give one or both end faces of either joining members of the first and second shaped plates 1 and 2 or other first and second joining members chrome platings and Ni-P platings by either electroless or electro plating or give chrome platings, Ni-P platings by either electroless or electro plating, and Cu platings by either electroless or electro plating. Further, it is possible to give only the brazing parts of at least one of the joining members among the brazing parts of the first and second shaped plates 1 and 2 or other first and second joining members chrome platings and Ni-P platings by either electroless or electro plating or give chrome platings, Ni-P platings by either electroless or electro plating, and Cu platings by either electroless or electro plating.

In the above embodiments, both end faces of the first and second shaped plates were plated with nickel and phosphorus, but it is also possible to plate nickel and phosphorus on only one end face of at least one shaped plate among the first and second shaped plates 1 and 2. Note that it is also possible to plate with nickel and phosphorus one or both end faces of the inner fins 7 comprised of the stainless steel. By plating various elements with a nickel base (plating of several layers also possible) and brazing in this way, a metal layer (alloy layer) superior in corrosion resistance can be obtained. As a brazing filler metal layer and plating layer, there are for example electroless nickel-based alloy plating layers such as Ni-P-W, Ni-P-Cu, Ni-P-Cr, and Ni-P-Co. These may be combined according to their melting points to obtain Ni alloys. Further, the present invention is not limited to a high corrosion resistance heat exchanger or other heat exchanger and may also be used for brazing together first and second plate-shaped members, brazing together first and second tubular-shaped members, brazing together a plate-shaped member and tubular-shaped members, brazing together first joining members and second joining members in a cross-shape or X-shape, brazing together first and second joining members where the second joining member is inserted into a through hole of the first joining member, etc.

According to the first and fourth aspects of the invention, since a brazing filler metal layer containing chrome, which has a high corrosion resistance, is formed between the joined parts of first and second joining members comprised of stainless steel, the corrosion resistance is excellent. Further, since a finer metal structure comprised of chrome, nickel, phosphorus, iron (diffused from the stainless steel), etc. can be realized in the brazing filler metal, the occurrence of cracks at the grain boundaries of the metal structure can be reduced. Therefore, by using chrome plating and nickel-phosphorus plating as the brazing filler metal layer interposed between the first and second joining members, the first and second joining materials can be brazed together without any need to use an expensive paste of the nickel brazing filler metal or nickel brazing filler metal foil. Due to this, it is possible to eliminate the step of coating or preplaced brazing, so a brazing method of an inexpensive brazement can be provided.

According to the second and fifth aspects of the invention, since copper is plated over a brazing filler metal layer containing chrome, which has a high corrosion resistance, between brazing parts of first and second joining members comprised of stainless steel, it is possible to realize a finer metal structure comprised of chrome, nickel, phosphorus, copper, iron (diffused from the stainless steel), etc. in the brazing filler metal, so it is possible to prevent cracks at the grain boundaries of the metal structure.

According to the sixth aspect of the invention, since a brazing filler metal layer containing chrome, which has a high corrosion resistance, is formed between the brazing parts of first and second shaped plates comprised of stainless steel in a corrosion resistant heat exchanger where the brazing parts of the first and second shaped plates are exposed to a corrosive environment through which a corrosive fluid flows, the corrosion resistance is excellent. Further, since a finer metal structure comprised of chrome, nickel, phosphorus, iron (diffused from the stainless steel), etc. can be realized in the brazing filler metal, the occurrence of cracks at the grain boundaries of the metal structure can be reduced. Therefore, the same effects can be achieved as in the fourth aspect of the invention, so a method of production of an inexpensive corrosion resistant heat exchanger can be provided.

According to the seventh aspect of the invention, by copper plating a brazing filler metal layer containing chrome, which has a high corrosion resistance, between brazing parts of first and second shaped plates comprised of stainless steel, it is possible to realize a finer metal structure comprised of chrome, nickel, phosphorus, copper, iron (diffused from the stainless steel), etc. in the brazing filler metal, so it is possible to prevent cracks at the grain boundaries of the metal structure.

While the invention has been described with reference to specific embodiment chosen for purpose of illustration, it should be apparent that numerous modifications could be made thereto by those skilled in the art without departing from the basic concept and scope of the invention.

The present disclosure relates to subject matter contained in Japanese Patent Applications No. 2000-136693, filed on May 10, 2000, and No. 2001-57725, filed on March 2, 2001 the disclosure of which is expressly incorporated herein by reference in its entirety.

## Claims

1. A brazing method for a brazement comprised of first and second joining members comprised of stainless steel brazed together and having brazing parts of the first and second joining members exposed to a corrosive environment in which a corrosive fluid flows, comprising
a first step of plating chrome on a brazing part of at least one of the first and second joining members to form a chrome-based brazing filler metal layer at the brazing part of that at least one joining member,
a second step of plating nickel-phosphorus on the chrome-based brazing filler metal layer to form a nickel-based brazing filler metal layer on the chrome-based brazing filler metal layer, and
a third step of heating to a temperature of at least the melting point of the nickel-based brazing filler metal layer to braze together the first and second joining members in the state with the chrome-based brazing filler metal layer and the nickel-based brazing filler metal layer interposed between the brazing parts of the first and second joining members.

2. A brazing method for a brazement comprised of first and second joining members comprised of stainless steel brazed together and having brazing parts of the first and second joining members exposed to a corrosive environment in which a corrosive fluid flows, comprising:
a first step of plating chrome on a brazing part of at least one of the first and second joining members to form a chrome-based brazing filler metal layer at the brazing part of that at least one joining member,
a second step of plating nickel-phosphorus on the chrome-based brazing filler metal layer to form a nickel-based brazing filler metal layer on the chrome-based brazing filler metal layer,
a third step of plating copper on the nickel-based brazing filler metal layer to form a copper-based brazing filler metal layer on the nickel-based brazing filler metal layer, and
a fourth step of heating to a temperature of at least the melting point of the nickel-based brazing filler metal layer to braze together the first and second joining members in the state with the chrome-based brazing filler metal layer, the nickel-based brazing filler metal layer, and the copper-based brazing filler metal layer interposed between the brazing parts of the first and second joining members.

3. A brazing method of a brazement as set forth in claim 1 or 2, wherein at least one of the joining members of the first and second joining members is at least one of
a housing through which a heat exchange medium flows and comprised of stainless steel,
a fluid channel arranged inside the housing and comprised of stainless steel,
an inner fin arranged inside the fluid channel and comprised of stainless steel,
a core plate connected to one end of a fluid channel and comprised of stainless steel, and
a tank plate forming a tank chamber with the core plate and comprised of stainless steel.

4. A brazement comprised of first and second joining members comprised of stainless steel brazed together and having brazing parts of the first and second joining members exposed to a corrosive environment in which a corrosive fluid flows, wherein
a brazing filler metal layer containing nickel, chrome, and phosphorus is interposed between the first joining member and the second joining member.

5. A brazement as set forth in claim 4, wherein the brazing filler metal layer further includes copper.

6. A method of production of a corrosion-resistant heat exchanger comprised of a housing comprised of stainless steel, a fluid channel arranged in the housing and comprised of stainless steel, and an inner fin arranged inside the fluid channels and comprised of stainless steel, a first joining member comprised of said housing or said fluid channel and a second joining member comprised of said fluid channel or said inner fin being brazed together and having brazing parts of the first and second shaped plates exposed to a corrosive environment in which a corrosive fluid flows, comprising
a first step of plating chrome on a brazing part of at least one of the first and second joining members to form a chrome-based brazing filler metal layer at the brazing part of that at least one joining member,
a second step of plating nickel-phosphorus on the chrome-based brazing filler metal layer to form a nickel-based brazing filler metal layer on the chrome-based brazing filler metal layer, and
a third step of heating to a temperature of at least the melting point of the nickel-based brazing filler metal layer to braze together the first and second joining members in the state with the chrome-based brazing filler metal layer and the nickel-based brazing filler metal layer interposed between the brazing parts of the first and second joining members.

7. A method of production of a corrosion-resistant heat exchanger comprised of a housing comprised of stainless steel, a fluid channel arranged in the housing and comprised of stainless steel, and an inner fin arranged inside the fluid channel and comprised of stainless steel, a first joining member comprised of said housing or said fluid channel and a second joining member comprised of said fluid channel or said inner fin being brazed together and having brazing parts of the first and second joining members exposed to a corrosive environment in which a corrosive fluid flows, comprising
a first step of plating chrome on a brazing part of at least one of the first and second joining members to form a chrome-based brazing filler metal layer at the brazing part of that at least one joining member,
a second step of plating nickel-phosphorus on the chrome-based brazing filler metal layer to form a nickel-based brazing filler metal layer on the chrome-based brazing filler metal layer,
a third step of plating copper on the nickel-based brazing filler metal layer to form a copper-based brazing filler metal layer on the nickel-based brazing filler metal layer, and
a fourth step of heating to a temperature of at least the melting point of the nickel-based brazing filler metal layer to braze together the first and second joining members in the state with the chrome-based brazing filler metal layer, the nickel-based brazing filler metal layer, and the copper-based brazing filler metal layer interposed between the brazing parts of the first and second joining members.

8. A method of production of a corrosion-resistant heat exchanger comprised by a first shaped plate of stainless steel and second shaped plate of stainless steel stacked together and a fluid channel provided between the first and second shaped plates and forming a fluid path through which a corrosive fluid flows, the first and second shaped plates being brazed together and having brazing parts of the first and second shaped plates exposed to a corrosive environment in which a corrosive fluid flows, comprising
a first step of plating chrome on a brazing part of at least one of the first and second shaped plates to form a chrome-based brazing filler metal layer at the brazing part of that at least one shaped plate,
a second step of plating nickel-phosphorus on the chrome-based brazing filler metal layer to form a nickel-based brazing filler metal layer on the chrome-based brazing filler metal layer, and
a third step of heating to a temperature of at least the melting point of the nickel-based brazing filler metal layer to braze together the first and second shaped plates in the state with the chrome-based brazing filler metal layer and the nickel-based brazing filler metal layer interposed between the brazing parts of the first and second shaped plates.

9. A method of production of a corrosion-resistant heat exchanger comprised by a first shaped plate of stainless steel and a second shaped plate of stainless steel stacked together and a fluid channel provided between the first and second shaped plates and forming a fluid path through which a corrosive fluid flows, the first and second shaped plates being brazed together and having brazing parts of the first and second shaped plates exposed to a corrosive environment in which a corrosive fluid flows, comprising
a first step of plating chrome on a brazing part of at least one of the first and second shaped plates to form a chrome-based brazing filler metal layer at the brazing part of that at least one shaped plate,
a second step of plating nickel-phosphorus on the chrome-based brazing filler metal layer to form a nickel-based brazing filler metal layer on the chrome-based brazing filler metal layer,
a third step of plating copper on the nickel-based brazing filler metal layer to form a copper-based brazing filler metal layer on the nickel-based brazing filler metal layer, and
a fourth step of heating to a temperature of at least the melting point of the nickel-based brazing filler metal layer to braze together the first and second shaped plates in the state with the chrome-based brazing filler metal layer, the nickel-based brazing filler metal layer, and the copper-based brazing filler metal layer interposed between the brazing parts of the first and second shaped plates.

10. A corrosion resistant heat exchanger comprised of a plurality of shaped plates made of stainless steel superior in corrosion resistance joined together in a thickness direction, provided between each adjoining two shaped plates with a fluid passage forming a fluid channel through which a corrosive fluid flows, and having a plurality of said fluid channels, wherein
the plurality of shaped plates are brazed together through a brazing filler metal layer containing nickel, chrome, and phosphorus.

11. A corrosion resistant heat exchanger comprised of
a housing comprised of stainless steel,
a fluid channel arranged inside the housing, carrying a corrosive fluid, and comprised of stainless steel, and
an inner fin arranged inside the fluid channel and comprised of stainless steel, wherein
the fluid channel and the inner fin are brazed together through a brazing filler metal layer containing nickel, chrome, and phosphorus.
